# EUROPEAN PATENT SPECIFICATION

(11) **EP 0 839 741 B1**
(45) Date of publication and mention of the grant of the patent: **19.06.2002**
(21) Application number: 97203320.3
(22) Date of filing: 27.10.1997
(51) Int. Cl.: B65G 61/00, B65G 47/90, B65G 59/02

(54) **System for removing containers from a loading platform and assembly consisting of such systems**
System zum Entfernen von Behältern von einer Lade-Plattform und Einheit mit solchen Systemen
Système pour retirer des conteneurs d'une plate-forme de chargement et unité composée de tels systèmes

(30) Priority: 29.10.1996 NL 1004378
(43) Date of publication of application: 06.05.1998
(73) Proprietor: Van Riet Machine- en Transportwerktuigenfabriek B.V., 3430 BD Nieuwegein (NL)
(72) Inventor: Van Riet, Theodorus Petrus Maria, 3405 CL Benschop (NL)
(74) Representative: de Bruijn, Leendert C.

(56) References cited:
- EP-A- 0 498 263
- EP-A- 0 550 114
- DE-A- 4 213 301
- PATENT ABSTRACTS OF JAPAN vol. 096, no. 003, 29 March 1996 & JP 07 291450 A (KAWASAKI HEAVY IND LTD), 7 November 1995,

## Description

The present invention relates to a system for removing containers, such as crates, from a loading platform, comprising a gripper arm, provided with gripper means, which engages on the containers from above, which gripper arm is movable in the horizontal and vertical directions and which gripper means are able to grip and release the container, detection means for determining the position of the gripper arm, gripper means and containers, and control means for controlling the movement of the gripper arm and gripper means, wherein the control means are equipped to allow the gripper arm to lower, from a position in which said gripper arm has been brought outwards in the horizontal direction, as far as the top of the container and then to bring the gripper arm with gripper means in the horizontal direction towards the container, followed by gripping said container and removing it from the loading platform.

A system of this type is generally known in the prior art. In supermarkets and other shops, return packaging such as crates filled with bottles is placed in roll pallets. In these cases the crates are dispatched unsorted and have to be identified and sorted according to type in distribution centres. With this procedure the crates have to be removed from the widely used roll pallets as the first step.

A vision system which is capable of functioning even with relatively large pallets is proposed in the prior art. To this end a number of cameras are provided which, coupled with particularly complex software, recognise the position of the crates and on the basis of this the position of the gripper arms or gripper means relative to the crates is controlled and said crates are gripped and then transferred. Although this installation is very satisfactory under optimum conditions, the high cost price in particular is important. Moreover, when used in roll pallets it is, on the one hand, a disadvantage that said installation is effective from one side only, as a consequence of which a particularly long unstacking time results, whilst, on the other hand, the number of stacking variants in such a relatively small roll pallet is limited.

The aim of the present application is to provide a system which offers facilities for unstacking roll pallets from two sides and which can be constructed considerably less expensively, it being possible in particular to do without the expensive vision system and the associated software.

Said aim is achieved with a system as described above, in that first detection means are present which determine the height position of the gripper means with respect to the tops of the containers and, via the control unit, control the movement of the gripper arm towards the container in the horizontal direction as a function of said height position, said detection means comprising photocells.

The invention is based on the insight that only restricted positions are possible when unstacking roll pallets. With the aid of inexpensive photodetection means it is possible to determine the position of the crates with respect to the gripper arm and gripper means.

The invention can be constructed in a particularly simple manner as an assembly comprising gripper arms, or gripper means, located opposite one another, by which means a roll pallet can be emptied from two sides. In an embodiment of this type, so as to provide particularly simple height compensation in the event of two crates of different heights located opposite one another having to be gripped, it is proposed, according to the invention, that the gripper means are arranged such that they have (limited) freedom of movement in the vertical direction with respect to the gripper arm.

According to a further advantageous embodiment of the invention, each gripper arm is moved downward at relatively high speed until the tops of crates are detected with the aid of the photodetection means. For this positioning of downward movement the gripper arms are in the outer position, so that there is no fear of them coming into contact with the crates. The gripper arms are then moved further at low speed, the gripper means together with the gripper arm moving inwards and thus coming into contact with the crates.

Depending on the size of the roll pallet and the dimensions of the crates, any number of gripper arms with gripper means can be used. However, it is preferred to use two series of six gripper arms which are arranged such that they are located opposite one another and thus form an assembly.

It is possible to empty roll pallets in a particularly simple and rapid manner with the construction described above.

Preferably, the gripper means according to the invention consist of a gripper finger and a gripper surface, between which the edge of the crate has to be gripped. Said gripper finger can be operated by a gripper cylinder in order thus to provide optimum clamping.

It will be understood that if a crate is relatively wide, two gripper arms with gripper means will grip such a crate. As a result the in general greater weight is taken up by two gripper arms and gripper means without any problem.

The invention will be explained in more detail below with reference to an illustrative embodiment shown in the drawing. In the drawing:
Fig. 1 shows a front view of the gripper assembly according to the invention;
Fig. 2 shows the cross-section along the line II-II in Fig. 1;
Fig. 3 shows a top view of the gripper assembly according to Figs 1 and 2; and
Figs 4-8 show the gripper assembly according to the invention in various positions when lifting crates.

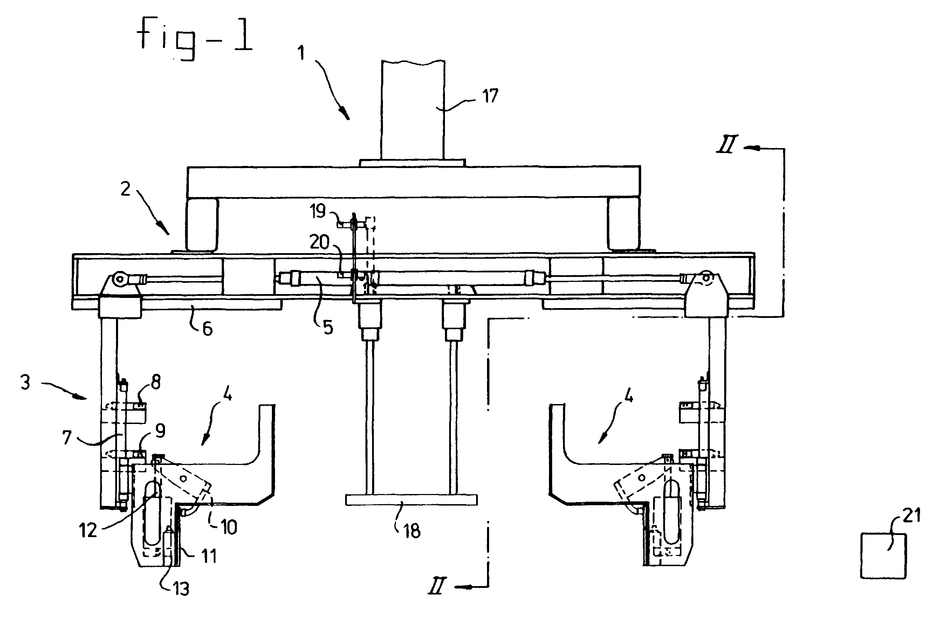

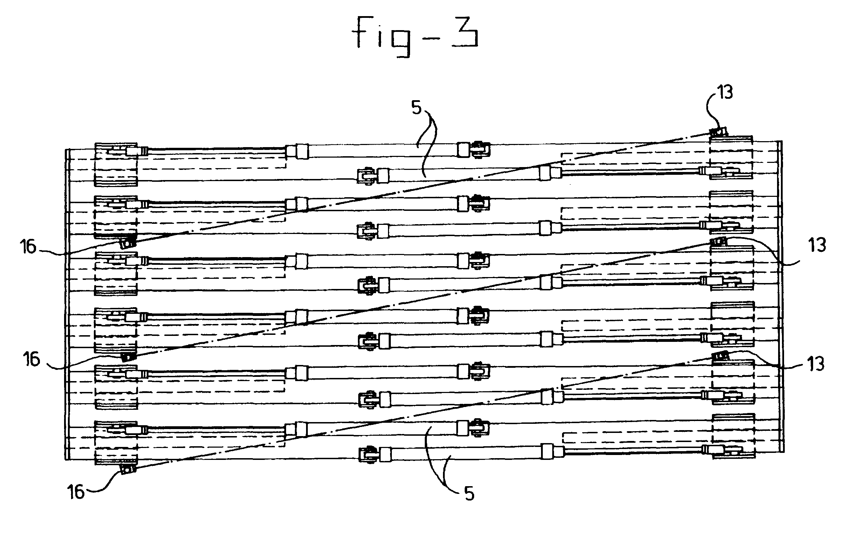

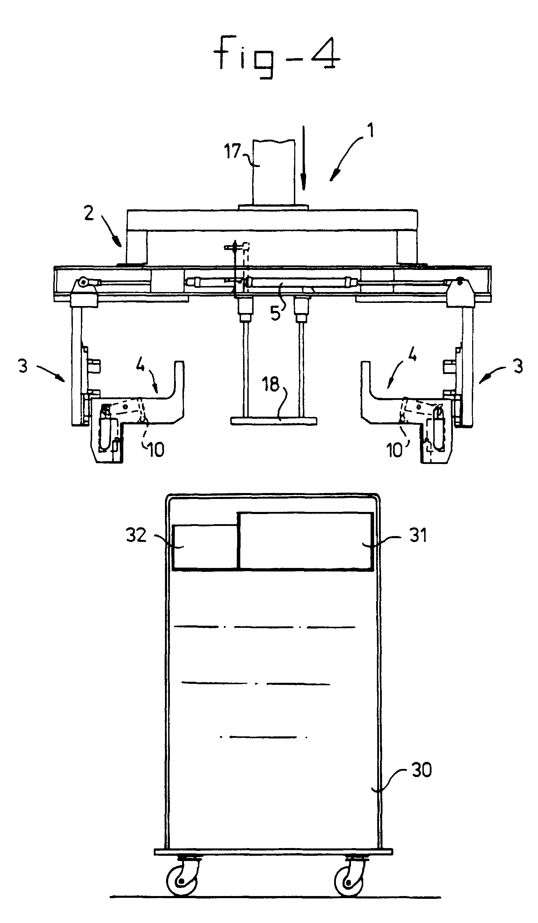

The gripper assembly according to the invention will first be explained in general with reference to Figs 1-3. Said gripper assembly is indicated in its entirety by 1 and consists of a frame 2. A rod 17, to which a handling robot is connected in a manner which is not shown in more detail, is fixed to said frame 2. Such a robot positions the assembly 2 above a roll pallet, which will be described with reference to Figs 4-8, and removes the gripper assembly, after crates have been lifted off by the latter, to a set-down position such as a conveyor belt. A robot of this type is generally known in the prior art.

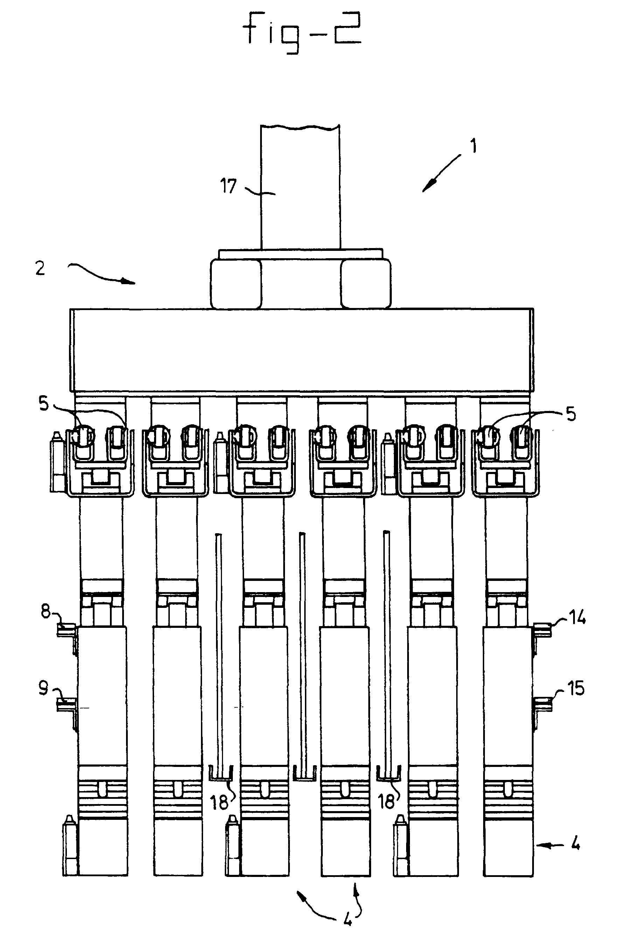

Six gripper arms 3 are fixed to each side of frame 2. Said twelve gripper arms are arranged in two opposite sets of six, as can be seen from Figs 2 and 3. Each gripper arm 3 is provided with a gripper claw 4. Each gripper claw 4 consists of a gripper finger 10 which interacts with a gripper surface 11. In the position shown in the drawing, the gripper arm 3 can be moved relative to frame 2 in the horizontal direction along guide 6 by means of pneumatic cylinders 5. Gripper claw 4 can move freely up and down along guide 7. No control means are provided for this purpose and gripper claw 4 is forced into the lowermost position by gravity. This movement can optionally be accentuated or reduced by fitting springs and the like. Gripper finger 10 is operated by cylinder 12.

A number of interacting light-emitting and light-receiving photocells are present in the installation. Photocell F1 is indicated by 13 and, as can be seen from Fig. 3, emits a diagonal beam towards the opposite photocell F6, which is constructed as a receiver and is indicated by 16. Photocell F2 is indicated by 8 and interacts with a photocell 14 which is located opposite and hereinafter is indicated by photocell F3. Photocell F4 is indicated by 9 and interacts with photocell F5, which is indicated by 15. As can be seen from Fig. 2, photocells F2 and F5 are always located on either side of the gripper arms. Moreover, three sensors 18 are present, which, depending on the position thereof, are independently of one another always able to operate switches 19 and 20.

All of said detectors are connected in a manner which is not shown in more detail to a control unit 21. Said control unit 21 also controls the operation of cylinders 5 and 13, whilst said control unit also controls the downward movement of frame 2 determined by the handling robot connected to rod 17.

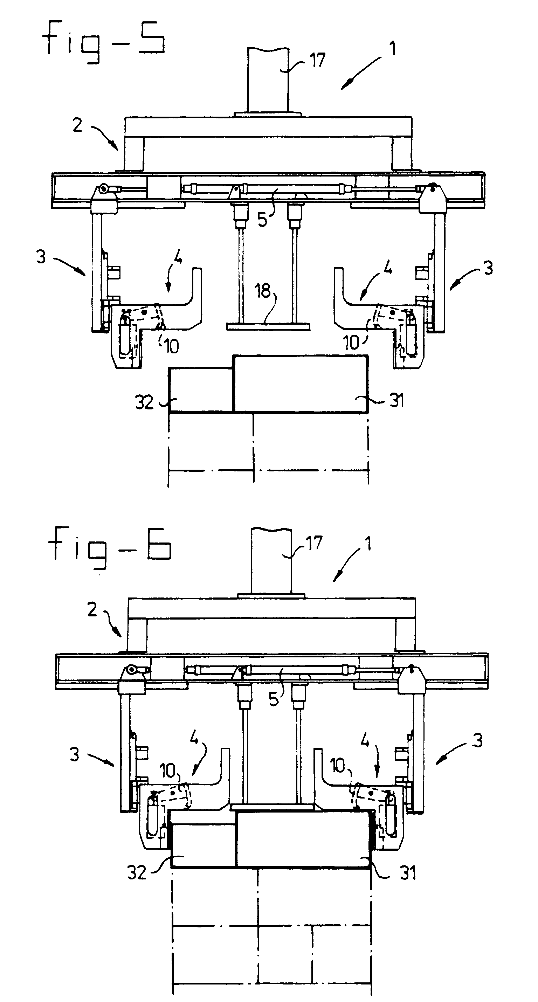

Fig. 4 shows, diagrammatically, a roll pallet 30, the top crates in which are indicated by 31 and 32. For the sake of clarity, the boundaries of the roll pallet 30 are not shown in Figs 5-8. It must be understood that said roll pallet consists of two walls which are located opposite one another and are located in the plane of the drawing in Fig. 4 and that the gripper arms are able to enter unencumbered into the space delimited between said walls in order to be able to grip and to be able to lift crates 31, 32 et seq.

In the position shown in Figure 4 there is as yet no interaction whatsoever between the tops of the crates and one of the detectors described above. Consequently, the frame, operated by the handling robot which is not shown in more detail, moves downwards at relatively high speed. As an example, a value of approximately 1.5 metres per second is quoted here. During said downward movement the gripper arms 3 located opposite one another are moved apart as far as possible. As far as the gripper arms 3 located between the outermost gripper arms are concerned, that is to say the inner four gripper arms of each series, this can be checked by whether or not the light beam originating from F2 and passing to F3 and originating from F4 and passing to F5 is interrupted. On lowering further, various detectors can be active.

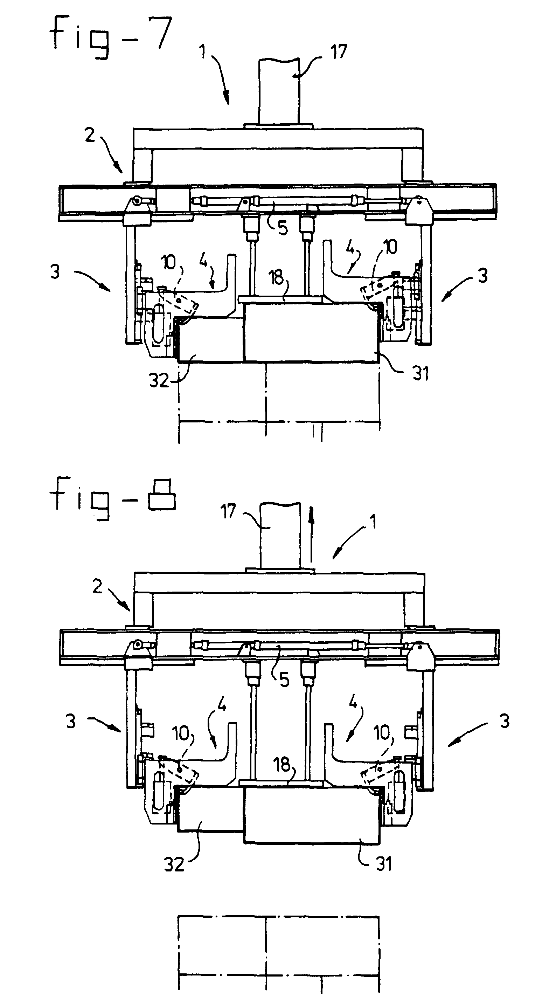

A first possibility is that in which the light beam originating from F1 (13) and passing to F6 (16) is interrupted. In this case the downward speed of the frame is reduced. One example of this is a value of 0.4 metre per second. Interruption of light beam F1-F6 is shown in Fig. 5. At the same time all gripper arms located opposite one another move towards one another, that is to say the cylinders 5 are actuated. As a result the situation shown in Fig. 6 is obtained, in which the gripper arms bear against the crates exerting a low pressure but do not yet close down on said crates from above. The installation then continues to move downwards, the relevant gripper claws engaging successively on the tops of the crates. Further downward movement of frame 2 is possible, the right-hand gripper claw remaining stationary and the frame 2 moving relative thereto with the aid of the guide 7. The left-hand gripper claw moves downwards with the frame 2 until it is bearing on crate 32. On further downward movement of the frame the light beam F2-F3 will be interrupted, after which the vertical movement of frame 2 is stopped. Because gripper claw 4 is able to move vertically relative to frame 2, the various gripper claws are able completely to come to lie on the tops of the crates but to assume a different position with respect to one another. If the displacement path of the gripper claw 4 relative to the frame is 15 cm, it is possible to compensate for variations in height of the same magnitude. Cylinder 12 is then actuated, as a result of which gripper finger 10 closes and grips the crate between gripper finger 10 and gripper surface 11 (Fig. 7). Depending on the width of the crate, the latter will be gripped by one or more gripper fingers. The handling robot then moves rod 17 upwards and after the gripper claw 4 has travelled the remaining movement path relative to the frame 2 the crates are lifted from the roll pallet and can be set down on a conveyor belt (Fig. 8). During this upward movement it is possible to operate the cylinders 5 such that the arms located opposite one another move apart, as a result of which a greater gap is produced between the various crates on the set-down surface.

In a second set-up, it is possible that a single relatively narrow crate is placed in the middle of the roll pallet. In such a case the displacement as a result of the closing movement of the gripper arms will not be sufficiently great to reach the top edge of such a crate, with the result that gripping of the crate by one of the gripper claws cannot be ensured. The sensors 18 are fitted in order to prevent this. If the sensors 18 are brought into a position in which the switch 19 is actuated whilst there has still been no interruption of light beam F4-F5 in this position, that is to say the gripper claw 4 has not yet been moved upwards, the control unit is then designed in such a way that the handling robot ceases its vertical downward movement immediately. It will be understood that in the meantime the speed has been brought back from the high speed to the low speed because as a result of the arrangement of three paths F1-F6 a crate of this type has already been detected. After termination of the vertical movement, the latter is converted into an upward movement until path F1-F6 is free. The frame 2 then lowers again until F1-F6 is actuated and, as a first step, the cylinders 5 of gripper arms located opposite one another move inwards for a fixed period of time and the movement described above is continued, that is to say a vertical downward movement combined with further inward movement of the gripper arms located opposite one another. Such a pre-determined time can be, for example, one second. In this way it is ensured that a relatively narrow crate is still gripped.

Because the installation is constructed in such a way that the gripper claws always maintain a certain spacing with respect to one another, for example 38 cm, it is possible that certain crates will still not be gripped. In such a case the sensor 18 in the last mentioned example will again be actuated earlier than F4-F5, that is to say the gripper claw will not move upwards. If this occurs, the control unit 21 is designed such that after the upward movement of the frame until F1-F6 is free the handling robot, which is not shown in more detail, is moved a small distance to the left or to the right, after which a downward movement is again executed, as described above.

It will be clear to those skilled in the art that many variants of the above are possible. For instance, it is possible to replace the sensor 18 by a calculation algorithm which, on the basis of F1-F6 and the lowering speed of frame 2, determines the point in time at which F4-F5 has to be interrupted. If this is not interrupted, this then means that the gripper claw is not resting on the top of a crate. These and further variants are obvious to those skilled in the art after reading the above and fall within the scope of the appended claims.

## Claims

1. System for removing containers, such as crates (31, 32), from a loading platform, comprising a gripper arm (3), provided with gripper means (4), which gripper arm engages on the containers from above, which gripper arm is movable in the horizontal and vertical directions and which gripper means are able to grip and release the container, detection means for determining the position of the gripper arm, gripper means and containers, and control means (21) for controlling the movement of the gripper arm and gripper means, wherein the control means are equipped to allow the gripper arm to lower, from a position in which said gripper arm has been brought outwards in the horizontal direction, as far as the top of the containers and then to bring the gripper arm with gripper means in the horizontal direction towards the container, followed by gripping said container and removing it from the loading platform, **characterised in that** first detection means (F1-F6,13,16) are present which determine the height position of the gripper means with respect to the tops of the containers and, via the control unit (21), control the movement of the gripper arm towards the container in the horizontal direction as a function of said height position, said detection means comprising photocells.

2. System according to Claim 1, wherein said gripper means are mounted such that they are freely movable in the vertical direction with respect to said gripper arm and second detection means (F2, F3,8,14) for said movement are provided which control the vertical movement of the gripper arm.

3. System according to one of the preceding claims, wherein said first detection means (F1, F6,13,16) influence the vertical speed of the gripper arm.

4. System according to one of the preceding claims, comprising a series of gripper arms, provided with gripper means, arranged alongside one another, wherein the first and the last in said series are provided with interacting detection means (F2-F5,8,14,9,15).

5. System according to Claim 4, wherein said series comprises six arms.

6. Assembly comprising two systems according to one of the preceding claims, which systems are located opposite one another and pick up the container(s) on the platform between them.

## Patentansprüche

1. System zum Entfernen von Behältern, wie etwa Kisten (31, 32), von einer Ladeplattform, welches aufweist:
einen Greifarm (3), der mit Greifmitteln (4) versehen ist, wobei der Greifarm mit den Behältern von oben in Eingriff kommt und in horizontaler und vertikaler Richtung bewegbar ist und die Greifmittel zum Erfassen und Freigeben des Behälters ausgebildet sind,
Erfassungsmittel zum Erfassen der Position des Greifarms, der Greifmittel und der Behälter und
eine Steuereinrichtung (21) zur Steuerung der Bewegung des Greifarms und der Greifmittel, wobei die Steuereinrichtung so ausgebildet ist, dass sie eine Absenkung des Greifarms aus einer Position, in die der Greifarm auswärts in horizontaler Richtung gebracht wurde, bis auf die Oberseite des Behälters und das anschließende Bringen des Greifarmes mit den Greifmitteln in horizontaler Richtung zum Behälter hin, worauf ein Ergreifen des Behälters und dessen Entfernen von der Ladeplattform folgt, erlaubt,
**dadurch gekennzeichnet, dass**
erste Erfassungsmittel (F1-F6, 13, 16) vorgesehen sind, welche die Höhenposition des Greifarms bezüglich der Oberseiten der Behälter bestimmen und über die Steuereinrichtung (21) die Bewegung des Greifarms zum Behälter hin in horizontaler Richtung in Abhängigkeit von der Höhenposition steuern, wobei die Erfassungsmittel Photozellen aufweist.

2. System nach Anspruch 1, wobei die Greifmittel derart montiert sind, dass sie in vertikaler Richtung bezüglich des Greifarms frei bewegbar sind, und zweite Erfassungsmittel, (F2, F3, 8, 14) für die Bewegung vorgesehen sind, welche die Vertikalbewegung des Greifarms steuern.

3. System nach einem der vorangehenden Ansprüche, wobei die ersten Erfassungsmittel (F1, F6, 13, 16) die Vertikalgeschwindigkeit des Greifarms beeinflussen.

4. System nach einem der vorangehenden Ansprüche, mit einer Reihe von Greifarmen, die mit Greifmitteln versehen und miteinander angeordnet sind, wobei der erste und der letzte in der Reihe mit Wechselwirkungs-Erfassungsmitteln (F2-F5, 8, 14, 9, 15) versehen ist.

5. System nach Anspruch 4, wobei die Reihe sechs Arme umfasst.

6. Anordnung mit zwei Systemen nach einem der vorangehenden Ansprüche, wobei die Systeme einander gegenüber angeordnet sind und (einen) Behäler auf der Ladeplattform zwischen sich aufnehmen.

## Revendications

1. Système pour retirer des récipients, tels que des caisses (31, 32) d'une plate-forme de chargement, comportant un bras préhenseur (3), muni de moyens de préhension (4), ce bras préhenseur venant en prise sur les récipients depuis le dessus, ce bras préhenseur étant mobile dans les directions horizontale et verticale, et ces moyens de préhension étant aptes à saisir et relâcher le récipient, des moyens de détection pour déterminer la position du bras préhenseur, des moyens de préhension et des récipients, et des moyens de commande (21) pour commander le déplacement du bras préhenseur et des moyens de préhension, dans lequel les moyens de commande sont équipés pour permettre au bras préhenseur de s'abaisser, à partir d'une position dans laquelle ledit bras préhenseur a été amené vers l'extérieur dans la direction horizontale, jusqu'au sommet des récipients, puis d'amener le bras préhenseur avec les moyens de préhension dans la direction horizontale vers le récipient, ceci étant suivi par la saisie dudit récipient et son retrait de la plate-forme de chargement, **caractérisé en ce que** des premiers moyens de détection (F1 à F6, 13, 16) sont présents, ceux-ci déterminant la position en hauteur des moyens de préhension par rapport aux sommets des récipients, et, par l'intermédiaire de l'unité de commande (21), commandant le déplacement du bras préhenseur vers le récipient dans la direction horizontale en fonction de ladite position en hauteur, lesdits moyens de détection comprenant des cellules photosensibles.

2. Système selon la revendication 1, dans lequel lesdits moyens de préhension sont montés de telle sorte qu'ils puissent se déplacer librement dans la direction verticale par rapport audit bras préhenseur, et des deuxièmes moyens de détection (F1, F2, 8, 14) pour ledit déplacement sont présents, ceux-ci commandant le déplacement vertical du bras préhenseur.

3. Système selon l'une des revendications précédentes, dans lequel lesdits moyens de détection (F1, F6, 13, 16) influencent la vitesse verticale du bras préhenseur.

4. Système selon l'une des revendications précédentes, comprenant une série de bras préhenseur, munis de moyens de préhension, disposés les uns les long des autres, dans lequel le premier et le dernier dans ladite série sont munis de moyens de détection d'interaction (F2 à F5, 8, 14, 9, 15).

5. Système selon la revendication 4, dans lequel ladite série comprend six bras.

6. Ensemble comprenant deux systèmes selon l'une des revendications précédentes, ces systèmes étant disposés en regard l'un de l'autre et saisissant le ou les récipient(s) sur la plate-forme entre eux.
